# EUROPÄISCHE PATENTSCHRIFT

(11) **EP 3 777 134 B1**
(45) Veröffentlichungstag und Bekanntmachung des Hinweises auf die Patenterteilung: **20.05.2026**
(21) Anmeldenummer: 18826698.5
(22) Anmeldetag: 21.12.2018
(51) Int. Cl.: H04N 7/18, B67C 3/00, G01N 21/00

(54) **VERFAHREN UND VORRICHTUNG ZUM INSPIZIEREN VON BEHÄLTNISSEN**
METHOD AND DEVICE FOR INSPECTING CONTAINERS
PROCÉDÉ ET DISPOSITIF D'INSPECTION DE RÉCIPIENTS

(30) Priorität: 29.03.2018 DE 102018107689
(43) Veröffentlichungstag der Anmeldung: 17.02.2021
(73) Patentinhaber: Krones AG, 93073 Neutraubling (DE)
(72) Erfinder: PIANA, Stefan, 93073 Neutraubling (DE); WILL, Christof, 93073 Neutraubling (DE); LINDNER, Peter, 93073 Neutraubling (DE)
(74) Vertreter: Hannke Bittner & Partner mbB Regensburg
(86) Internationale Anmeldenummer: PCT/EP2018/086481
(87) Internationale Veröffentlichungsnummer: WO 2019/185185

(56) Entgegenhaltungen:
- WO-A1-2014/204993
- WO-A1-2017/191361
- WO-A1-2017/211974
- WO-A1-2018/007215
- CA-A1- 2 764 192
- US-A1- 2008 291 438
- US-A1- 2015 308 898
- US-B1- 6 275 603

## Beschreibung

Die vorliegende Erfindung bezieht sich auf ein Verfahren und eine Vorrichtung zum Inspizieren von Behältnissen. Derartige Verfahren und Vorrichtungen sind aus dem Stand der Technik seit Langem bekannt. Üblicherweise werden dabei Behältnisse mittels einer Transporteinrichtung insbesondere vereinzelt transportiert. Während dieses Transports werden diese Behältnisse von Kameras beobachtet, um so bestimmte Eigenschaften erfassen zu können, wie beispielsweise fehlerhaft aufgebrachte Etiketten, Fehler an den Mündungen der Behältnisse oder auch an den Böden.

Damit bezieht sich die Erfindung auf Maschinen mit Videosystemen, insbesondere im Bereich der getränkeherstellenden Industrie, welche zur Inspektion, Kontrolle, Steuerung, Ausrichtung und/oder Sortierung von Behältnissen oder Gebinden dienen. Daneben bezieht sich die Erfindung auch auf Sensoren zur Regelung von Maschinen- und Anlagenfunktionen. Beispiele hierfür sind, wie oben erwähnt Boden-, Mündungs- oder Seitenwandinspektionen in einer Leerbehälterinspektionsanlage. Daneben kann die Erfindung jedoch auch bei Etikettenverschluss- oder Füllstandskontrollen Anwendung finden, beispielsweise nach einer Füll- oder Etikettiermaschine oder auch im Bereich einer Behältnissortierung, etwa vor einer Reinigungsmaschine.

Derartige Maschinen weisen üblicherweise abgesehen von der Transporteinrichtung und der Bildaufnahmeeinrichtung auch mehrere Triggersysteme wie z. B. Lichtschrankensysteme auf, welche dazu dienen, sicherzustellen, dass eine Bildaufnahme der Behältnisse in einem richtigen Moment ausgelöst wird. In einer aus dem Stand der Technik bekannten Ausgestaltung ist es auch bekannt, eine Bildaufnahme direkt mittels einer Triggereinheit (und in Verbindung mit einer Lichtschranke) auszulösen. Der Nachteil dieser Vorgehensweise besteht darin, dass eine derartige Trigger- oder Lichtschrankeneinheit Bauraum benötigt und zwar insbesondere Bauraum stromaufwärts der Bildaufnahmeeinheit. Daneben müssen die Triggereinheit bzw. deren einzelne Sensoren mit der Transporteinrichtung verbunden und insbesondere verdrahtet werden. Daneben weist diese Triggereinheit üblicherweise auch eine Mechanik und einen oder mehrere Sensoren auf und führt damit zu einem Kostenfaktor bei der Anschaffung und Montage. Daneben erfordern die einzelnen Sensoren auch eine Justierung, bei Zeiten eine Nachjustierung und insbesondere auch eine regelmäßige Reinigung.

Durch einen Verschleiß, zum Beispiel durch die Längung einer Transportkette müssen üblicherweise auch die Parameter eines derartigen Trackingsystems nachgestellt werden, um eine ordnungsgemäße Triggerung aufrecht zu erhalten.

Daneben können die Sensoreinrichtungen zum Beispiel aufgrund eines Defekts oder einer mangelnden Reinigung ausfallen und dadurch die Produktion einer gesamten Anlage lahmlegen.

Weiterhin benötigt die Triggereinheit in vielen Fällen eine Höhenverstellung, beispielsweise um die Triggerung bei verschiedenen Behältnishöhen immer an der optimalen vertikalen Position durchzuführen. Alternativ wäre es auch denkbar, mehrere Sensoren in unterschiedlichen Höhen vorzusehen oder aber ein vertikales Triggerlichtgitter zu verbauen. In einem Trivialfall, über den beispielsweise kein Drehimpulsgeber für den Antrieb der Transporteinrichtung vorgesehen ist, ist darüber hinaus auch eine Verstellung in der Transportrichtung erforderlich, beispielsweise um Behältnisse unterschiedlichen Durchmessers in unterschiedlichen Produktionsarten positionsgerecht zu ihrer Mittelebene auszurichten bzw. aufzunehmen.

Weiterhin erzeugen die Triggersignalerzeugung über die Triggereinheit, die Verzögerung des Triggersignals in der Triggereinheit und die Signalübertragung die Triggerunsicherheit, das heißt die Bildaufnahme wird nicht bei jedem Behälter exakt an der eingestellten Soll-Position ausgelöst, sondern auch kurz davor oder kurz danach. Während einige Anwendungen dieser Inspektionsmaschinen durchaus tolerant gegenüber einer Triggerunsicherheit von 1 mm sind, erfordern andere eine sehr hohe Triggergenauigkeit von deutlich unter 1 mm. Durch stetig wachsende Produktionsgeschwindigkeiten werden diese Problematiken noch weiter verschärft.

WO 2017/211974 A1 beschreibt die Inspektion von Behältern auf einem Förderband mit Hilfe von optischen Kameras. Durch Schmiermittel erzeugter Schaum stört die Bildgebung, daher zerstört ein Ultraschallgerät den Schaum vor der Inspektion, was die Zuverlässigkeit verbessert und den Einsatz von Hochdruckluft überflüssig macht. WO 2018/007215 A1 betrifft Inspektionseinheiten, deren Kameras durch Schutzglas hindurchsehen. Es verfügt über ein spezielles Beleuchtungs- und Bildgebungssystem, um Verunreinigungen oder Beschädigungen des Schutzglases selbst zu erkennen und eine korrekte Inspektion ohne externe visuelle Verzerrungen zu gewährleisten. US 2008/291438 A1 nimmt mit mehreren Kameras und Beleuchtungskonfigurationen zahlreiche Bilder jeder gefüllten Flasche auf. Mögliche Defekte werden durch Stereovision und 3D-Modellierung zusammengeführt, um festzustellen, ob sich Partikel in der Flüssigkeit oder an der Wand befinden.

Der vorliegenden Erfindung liegt daher die Aufgabe zugrunde, bei derartigen Verfahren und Vorrichtungen zum Inspizieren von Behältnissen auf derartige Triggersysteme verzichten zu können oder sie zumindest einfacher ausgestalten zu können. Auch ist es eine Aufgabe der Erfindung, die oben erwähnten Nachteile insbesondere hinsichtlich Betriebskosten, Bauraum und Triggerunsicherheit zu reduzieren oder gänzlich zu eliminieren. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche. Bei einem erfindungsgemäßen Verfahren zum Inspizieren von Behältnissen werden die Behältnisse mittels einer Transporteinrichtung entlang eines vorgegebenen Transportpfads transportiert. Dabei nimmt wenigstens eine erste Bildaufnahmeeinrichtung während des Transports der Behältnisse ein ortsaufgelöstes Inspektionsbild wenigstens eines Bereichs eines Behältnisses bzw. der Behältnisse auf. Erfindungsgemäß wird eine Auslösung dieser Inspektionsbildaufnahme des ortsaufgelösten Bildes gesteuert, wobei diese Steuerung unter Berücksichtigung einer Auslösebildaufnahme eines Bildes des Behältnisses erfolgt.

Es wird also im Gegensatz zum Stand der Technik vorgeschlagen, dass nicht mittels einer Triggersteuerung, einschließlich eines oder mehrerer Triggersensoren wie z. B. einer Lichtschranke die Bildauslösung gesteuert bzw. ausgelöst wird, sondern die Auslösung durch die Aufnahme eines weiteren Bildes, insbesondere desselben Behältnisses erfolgt. So ist es möglich, dass zunächst eine Auslösebildaufnahme des Behältnisses durchgeführt wird, insbesondere um so eine Position des Behältnisses zu erfassen und auf Basis dieser Information dann die Inspektionsbildaufnahme ausgelöst wird.

Bevorzugt erfolgt also die Auslösebildaufnahme zur Erfassung einer Position des Behältnisses und insbesondere einer Position in der Transportrichtung. Bevorzugt wird die Auslösebildaufnahme an dem gleichen Behältnis durchgeführt wie die Inspektionsbildaufnahme. Bevorzugt wird die Auslösebildaufnahme zeitlich vor der Inspektionsbildaufnahme durchgeführt.

Bevorzugt ist ein zeitlicher Abstand zwischen der Auslösebildaufnahme und der Inspektionsbildaufnahme kleiner als 5 ms, bevorzugt kleiner als 2 ms, bevorzugt kleiner als 1 ms, bevorzugt kleiner als 500 µs. Besonders bevorzugt ist ein zeitlicher Abstand zwischen der Auslösebildaufnahme und der Inspektionsbildaufnahme größer als 0,1 µs, bevorzugt größer als 0,5 µs.

Bevorzugt werden die Auslösebildaufnahmen wiederholt und/oder zyklisch ausgelöst, wobei bevorzugt erst dann eine Inspektionsbildaufnahme ausgelöst wird, wenn der zu inspizierende Behälter in vorgegebener Weise und insbesondere optimal zur Positionsbestimmung im Auslösebild abgebildet ist. Bevorzugt erfolgt andernfalls keine Reaktion und insbesondere keine Auslösung einer Bildaufnahme. Eine Möglichkeit dies zu erreichen besteht darin, dass der Zyklus (bzw. die Wiederholrate) der Auslösebildaufnahmen kurz genug ist, damit jedes Behältnis mindestens einmal optimal abgebildet wird. Wenn beispielsweise Behältnisse auf einem einbahnigen Transporteur mit einer Geschwindigkeit von 2.0 m/s transportiert werden sollen und die Abbildung der Behältnisse in den Auslösebildaufnahmen von Bild zu Bild nicht mehr als 10 mm Versatz aufweisen sollen, dann sollte der Zyklus nicht länger als 5 ms dauern.

Die zyklische Auslösebildaufnahme kann bevorzugt entweder freilaufend erfolgen, d.h. die Kamera nimmt immer zum nächstmöglichen Zeitpunkt das nächste Auslösebild auf, wobei die vorgegebene Maximalzeit zur optimalen Abbildung nie überschritten werden darf, oder sie kann zeit- oder weggesteuert in einem festen Raster erfolgen.

Bevorzugt ist der Zyklus bzw. die Wiederholrate der Aufnahme der Auslösebilder derart gewählt, dass die Abbildung der Behältnisse in den Auslösebildaufnahmen von Bild zu Bild einen Versatz von weniger als 30 mm, bevorzugt von weniger als 20 mm und besonders bevorzugt von weniger als 10 mm aufweisen.

Bevorzugt werden wenigstens zwei Auslöse-Bildaufnahmen durchgeführt. Insbesondere werden je aufzunehmenden Behältnis wenigstens zwei Auslöse-Bildaufnahmen durchgeführt Besonders bevorzugt wird (insbesondere je aufzunehmendem Behältnis) eine Vielzahl von Auslöse-Bildaufnahmen durchgeführt und insbesondere eine Vielzahl von Auslöse-Bildaufnahmen insbesondere zyklisch wiederholt.

Bevorzugt werden die Auslösebilder mit einem Zyklus bzw. einer Wiederholrate von weniger als 40 ms, bevorzugt von weniger als 30 ms, bevorzugt von weniger als 20 ms und besonders bevorzugt von weniger als 10 ms aufgenommen.

Bevorzugt werden die Auslösebilder wenigstens vorübergehend abgespeichert. Bevorzugt werden die Auslösebilder mit wenigstens einer Markierungsinformation aufgenommen und/oder abgespeichert.

Bei dieser Markierungsinformation kann es sich bevorzugt um eine Information handeln, welche für einen Zeitpunkt der Aufnahme des Bildes und/oder einen Ort des Behältnisses und/oder einer Position der Transporteinrichtung charakteristisch ist. Bevorzugt kann es sich bei dieser Markierungsinformation um eine Information handeln, welche den Zeitpunkt der Aufnahme des Auslösebildes und/oder den Ort des Behältnisses und/oder die Position der Transporteinrichtung eindeutig identifiziert.

Weiterhin wäre es auch möglich, dass die Auslösebilder mit einer Indizierungsinformation aufgenommen werden, etwa mit einer laufenden Nummer für jedes Auslösebild.

Bei einer weiteren bevorzugten Ausführungsform werden Kamera und/oder Lichtquelle nach erfolgter Inspektionsaufnahme für einen vorgegebenen Bereich bzw. Zeitraum abgeschaltet und insbesondere in einem Zeitraum, in dem aus mechanischen Gründen kein neues Behältnis für eine erneute Abfolge aus Auslöse- und Inspektionsbildaufnahme vorhanden sein kann. Bevorzugt ist die Ruhezeit zwischen Inspektionsbildaufnahme und erneuter Auslösebildaufnahme etwas kleiner als die Zeit zwischen den Bildaufnahmepositionen zweier maximal dicht zusammenstehender Behälter.

Bei einem weiteren bevorzugten Verfahren dient die Inspektionsbildaufnahme zu einer Inspektion wenigstens eines Bereichs des Behältnisses insbesondere zu einer Inspektion, welche aus einer Gruppe von Inspektionen ausgewählt ist, welche eine Seitenwandinspektion, eine Bodeninspektion, eine Mündungsinspektion, eine Verschlussinspektion, Kombinationen hieraus und dergleichen enthält. Bei einer weiteren bevorzugten Ausführungsform werden die Behältnisse entlang eines geradlinigen Transportpfads transportiert. Eine entsprechende Vorrichtung kann beispielsweise einen ein- oder mehrbahnigen Transporteur, insbesondere einen einbahnigen Transporteur aufweisen, auf dem die Behältnisse in einer vorgegebenen Ausrichtung angeordnet sind, insbesondere stehen.

Besonders bevorzugt werden die Behältnisse auch im Wesentlichen synchron, insbesondere synchron zu einer Transportkette oder zu einem Transportband, bewegt.

Weiterhin wird wenigstens zeitweise eine Position einer Antriebseinrichtung der Transporteinrichtung erfasst. Anhand dieser Position der Antriebseinrichtung kann auf eine Position der Transporteinrichtung und/oder der Behältnisse geschlossen werden und dies wiederum zur Triggerung der Auslösebildaufnahme und bevorzugt damit final der Inspektionsbildaufnahme verwendet werden.

Eine entsprechende unten genauer beschriebene Vorrichtung kann dabei beispielsweise einen Drehimpulsgeber aufweisen, der insbesondere an der Transporteinrichtung angeordnet ist, und der beispielsweise je nach Bewegung einer Kette oder eines Transportbands eine entsprechende Anzahl an Weginkrementen als Signal liefert. Bevorzugt kann auch eine Prozessoreinrichtung vorgesehen sein, welche eine Anzahl an Weginkrementen berechnet.

Weiterhin liefert bevorzugt eine Triggereinheit insbesondere bei einem Vorbeitransport eines Behältnisses ein Triggersignal. Dabei kann eine Triggereinheit vorgesehen sein. Diese weist im Rahmen der Erfindung insbesondere eine Bildaufnahmeeinrichtung, besonders bevorzugt wie unten erläutert die gleiche Bildaufnahmeeinrichtung, die auch zur Aufnahme des Inspektionsbildes dient, auf. Insbesondere liefert diese Triggereinheit beim Vorbeitransport der Behältnisse ein Triggersignal.

Daneben kann auch eine Erfassungseinrichtung vorgesehen sein, welche in der Lage ist, sowohl stehende als auch liegende Behältnisse zu erkennen.

Bei den Behältnissen handelt es sich allgemein insbesondere um Flaschen bzw. Getränkeflaschen aus Glas oder Kunststoff, Getränkedosen oder Sekundärverpackungen wie beispielsweise Getränkekästen oder Umverpackungen aus Karton.

Zusätzlich können auch Erfassungseinrichtungen zum Erfassen von Getränkedosen vorgesehen sein. Hierbei kann es sich beispielsweise um induktive Näherungssensoren handeln.

Bei einer bevorzugten Ausführungsform ist auch eine Trackingeinheit vorgesehen, welche erzeugte Triggersignale, beispielsweise um eine vorgegebene Anzahl an Weginkrementen verzögert. In diesem Fall kann beispielsweise eine Bildaufnahme in Abhängigkeit von dem von der Bildaufnahmeeinrichtung aufgenommenen Auslösebild gesteuert und/oder getriggert werden. Dabei kann eine derartige Einheit in der Bildaufnahmeeinrichtung selbst angeordnet sein, oder aber auch in einem externen Trackingcontroller. Insbesondere wenn Behältnisse unterschiedlichen Durchmessers und/oder in unterschiedlichen Produktionssorten positionsgerecht zu ihrer Mittelachse getriggert werden sollen, kann die Anpassung an einen Behältnisdurchmesser durch eine unterschiedliche Anzahl an Weginkrementen erfolgen.

Bevorzugt werden die Bilder mittels einer Kamera aufgenommen, welche besonders bevorzugt eine oder mehrere Industriekameras aufweist, welche besonders bevorzugt jeweils mit einer abbildenden Optik zur Bildaufnahme ausgebildet sind. Diese Aufnahme kann dabei durch ein Triggersignal, welches besonders bevorzugt von der gleichen Bildaufnahmeeinrichtung stammen kann, ausgelöst werden.

Weiterhin werden, wie unten genauer beschrieben, die Behältnisse zum Zwecke ihrer Inspektion beleuchtet. Eine entsprechende Vorrichtung kann dabei eine Beleuchtungseinrichtung aufweisen. Diese Beleuchtungseinrichtung kann, wie unten genauer beschrieben, Dauerlicht liefern oder auch schaltbar sein. Daneben kann auch ein Dauerlicht vorgesehen sein, welches beispielsweise bei längerer Inaktivität einer Kamera abgeschaltet wird.

Weiterhin ist es auch denkbar, dass hochgenau oder behältergenau und auch synchron zur Bildaufnahme getriggert wird. Dabei kann ein Beleuchtungstrigger vorgesehen sein, der entweder wiederum durch die Bildaufnahme gesteuert wird oder aber die Bildaufnahmeeinrichtung und die Beleuchtung können beide Triggersignale verzögerungsarm, das heißt insbesondere in einem Bereich von wenigen µs verarbeiten und werden bevorzugt durch das Triggersignal angesteuert.

Weiterhin ist es auch möglich, dass die Beleuchtung je nach Aufgabe in unterschiedlichen Anordnungen erfolgen kann und auch Licht unterschiedlicher Art abgeben kann. So kann es sich, wie unten genauer erwähnt, um eine Auflichtbeleuchtung, eine Durchlichtbeleuchtung oder auch ein Dunkelfeld handeln.

Daneben wäre es auch denkbar, dass mehrere Beleuchtungsarten bzw. Belichtungszeiten miteinander kombiniert werden.

Bei einer weiteren bevorzugten Ausgestaltung ist ein Bildauswertesystem vorgesehen, welches die Bilder einer Bildaufnahmeeinrichtung beispielsweise über eine entsprechende Kameraschnittstelle empfängt. Daneben kann eine Verarbeitung dieser Bilder erfolgen und eine verarbeitende Information kann erzeugt werden, wie beispielsweise eine Sortierinformation oder aber gut/schlecht-Signale. Ein derartiges Auswertesystem kann ebenfalls in der Bildaufnahmeeinrichtung selbst integriert sein oder aber extern verbaut sein.

Bei einem weiteren bevorzugten Verfahren erfolgt die Auslösebildaufnahme durch die Bildaufnahmeeinrichtung, also insbesondere durch die gleiche Bildaufnahmeeinrichtung, welche auch das Inspektionsbild aufnimmt. Bei diesem Verfahren wird damit eine Selbsttriggerung der Kamera durch eine insbesondere vorausgegangene Aufnahme vorgeschlagen.

Bevorzugt wird die Auslösebildaufnahme von dem gleichen Behältnis aufgenommen, von dem auch das Inspektionsbild aufgenommen wird.

Bei einem weiteren bevorzugten Verfahren werden die Behältnisse vereinzelt transportiert. Insbesondere werden die Behältnisse mit einem vorgegebenen Abstand zueinander transportiert und insbesondere mit einem Abstand zueinander, der kleiner ist als der Querschnitt eines Behältnisses.

Bevorzugt nimmt daher die Bildaufnahmeeinrichtung sowohl das Auslösebild als auch das Inspektionsbild auf.

Bei einem weiteren bevorzugten Verfahren unterscheiden sich die Auslösebildaufnahme und die Inspektionsbildaufnahme in wenigstens einem für die Bildaufnahme charakteristischen Parameter. Dies bedeutet, dass insbesondere technische Parameter für die Bildaufnahme geändert werden und besonders bevorzugt nicht zweimal im Wesentlichen ein hinsichtlich der Bildaufnahme identisches Bild aufgenommen wird.

Unter den für die Bildaufnahme charakteristischen Parameter wird insbesondere ein Parameter verstanden, der für Eigenschaften der Bildaufnahmeeinrichtung und insbesondere eine Wiederholrate charakteristisch ist oder diese beeinflusst. Bei einem bevorzugten Verfahren ist der Parameter aus einer Gruppe von Parametern ausgewählt, welche eine Auflösung des aufgenommenen Bildes, eine Größe des aufgenommenen Bildes, eine Datengröße des aufgenommenen Bildes, eine Flächengröße des aufgenommenen Bereichs des Behältnisses, eine Farbtiefe des aufgenommenen Bildes, eine Bildwiederholrate, einen Beleuchtungsparameter wie Beleuchtungsstärke, -farbe oder -richtung und dergleichen enthält.

Besonders bevorzugt wird für das Auslösebild ein Parameter gewählt, der eine höhere Bildwiederholrate ermöglicht. So ist es beispielsweise möglich, dass das Auslösebild mit einer geringeren Auflösung aufgenommen wird. Es wäre jedoch auch und/oder zusätzlich möglich, dass für das Auslösebild ein geringerer Flächenbereich des Behältnisses aufgenommen wird.

Wie erwähnt, erlauben die unterschiedlichen Parameter eine unterschiedliche Wiederholrate. Auf diese Weise ist es möglich, dass unmittelbar nach der Aufnahme des Auslösebildes das weitere Inspektionsbild aufgenommen werden kann. Dieses kann dann wiederum mit einer erhöhten bzw. auch einer maximalen Auflösung aufgenommen werden.

Es wäre weiterhin auch denkbar, dass während einer Zeitspanne, welche einer bestimmten geometrischen Dimension der Behältnisse, etwa einem halben Behältnisdurchmesser, entspricht, das weitere Inspektionsbild aufgenommen wird.

Bei einem weiteren bevorzugten Verfahren wird die Inspektionsbildaufnahme unter Berücksichtigung einer Transportgeschwindigkeit der Behältnisse gesteuert. So wird zunächst das Auslösebild aufgenommen und anhand des Auslösebildes wird mittels der Transportgeschwindigkeit und/oder der Momentanposition des Behältnisses die eigentliche Bildaufnahme gesteuert bzw. ausgelöst.

Bei einem weiteren bevorzugten Verfahren wird das Behältnis wenigstens zeitweise während der Aufnahme zumindest des Inspektionsbildes und/oder während der Auslösebildaufnahme beleuchtet. Auf diese Weise kann die Bildaufnahme selbst verbessert werden bzw. überhaupt erst eine Aufnahme unter definierten Bedingungen erfolgen. Dies kann insbesondere bei ständig steigenden Transportgeschwindigkeiten vorteilhaft sein. In diesen Fällen muss die Bildaufnahmeeinrichtung mit immer kürzeren Bildöffnungszeiten zurechtkommen. Diese immer kürzeren Zeiten können durch entsprechend stärkere Beleuchtung zumindest teilweise kompensiert werden.

Bei einem weiteren bevorzugten Verfahren wird das Behältnis während der Aufnahme des Inspektionsbildes gepulst beleuchtet. So kann eine Blitzlampensteuerung eingesetzt sein, welche das Behältnis in Aufnahme der Bildaufnahme mit einem Lichtblitz beaufschlagt, um so das Behältnis beleuchten zu können.

Bevorzugt wird dabei auch diese Beleuchtung bzw. dieser Beleuchtungspuls unter Berücksichtigung des Auslösebilds gesteuert. So kann das Auslösebild insbesondere unmittelbar eine Ansteuerung der Beleuchtungseinrichtung bewirken, es wäre jedoch auch eine mittelbare Ansteuerung, insbesondere über die Ansteuerung der Bildaufnahmeeinrichtung möglich. Umgekehrt wäre es auch möglich, dass etwa durch einen Lichtpuls die Aufnahme des Inspektionsbildes ausgelöst wird. Auch in diesem Falle wird jedoch insbesondere mittelbar durch die Auslösebildaufnahme die Inspektionsbildaufnahme ausgelöst

Weiterhin wäre es auch denkbar, dass das Behältnis für die Auslöseaufnahme mit Dauerlicht beleuchtet wird.

Bei einem weiteren bevorzugten Verfahren wird eine Position des Behältnisses zeitlich und/oder örtlich für die Durchführung der Auslöseaufnahme erfasst. In diesem Falle ist es möglich, dass bereits vor der Erstellung der Auslöseaufnahme eine Position und insbesondere wenigstens eine Grobposition des Behältnisses auf der Transporteinrichtung erfasst wird. Zu diesem Zweck können beispielsweise Lichtschranken vorgesehen sein. So ist es möglich, dass eine Lichtschranke zunächst den ungefähren Ort des Behältnisses erfasst, anschließend die Bildaufnahmeeinrichtung eine Auslöseaufnahme tätigt und auf Basis dieser Auslöseaufnahme schließlich die eigentliche Inspektionsaufnahme durch die Bildaufnahmeeinrichtung getätigt wird. Vorteilhaft ist daher eine derartige Lichtschrankenanordnung in der Transportrichtung der Behältnisse vor der Bildaufnahmeeinrichtung angeordnet und ist besonders bevorzugt Basis für die Auslöseaufnahmen mehrerer unabhängiger Kamerasysteme die örtlich verteilt angeordnet sein können.

Bei einem weiteren bevorzugten Verfahren erfolgt die Auslösung der Aufnahme des Inspektionsbildes unter Berücksichtigung einer Auslösebedingung, wobei bevorzugt diese Auslösebedingung aus einer Gruppe von Auslösebedingungen ausgewählt ist, welche eine Änderung der mittleren Helligkeit in einem Triggerbildausschnitt, eine Änderung eines Kontrastes der einzelnen Pixel in einem Bildausschnitt, eine Änderung einer Varianz und/oder Ortsfrequenz der Bildhelligkeiten einzelner Pixel, das Erfassen eines bestimmten Musters und/oder das Erfassen einer bestimmten Farbe enthält.

So wäre es beispielsweise möglich, dass die Bildaufnahmeeinrichtung auf die Erfassung eines bestimmten Elements eines Etiketts eingestellt wird und anhand der Position bzw. der erfassten Position dieses Merkmals die exakte Position des Behältnisses auf der Transporteinrichtung bestimmt. Auf Basis dieser Daten können die Inkremente bzw. auch die Zeit berechnet werden, nach der die Auslösung des eigentlichen Bildes erfolgt.

Die vorliegende Erfindung ist weiterhin auf eine Vorrichtung zum Inspizieren von Behältnissen gerichtet, welche eine Transporteinrichtung aufweist, welche die Behältnisse entlang eines vorgegebenen Transportpfads transportiert.

Weiterhin weist die Vorrichtung eine erste Bildaufnahmeeinrichtung auf, welche dazu geeignet und bestimmt ist, während des Transports der Behältnisse wenigstens ein ortsaufgelöstes Inspektionsbild wenigstens eines Bereichs eines Behältnisses aufzunehmen, wobei die Vorrichtung eine Auslöseeinrichtung aufweist, welche dazu geeignet und bestimmt ist, die Auflösung der Inspektionsbildaufnahme des ortsaufgelösten Bildes zu steuern.

Erfindungsgemäß weist diese Auslöseeinrichtung wenigstens eine Bildaufnahmeeinrichtung und insbesondere die erste Bildaufnahmeeinrichtung auf, welche dazu geeignet und bestimmt ist, während des Transports des Behältnisses ein Auslösebild des Behältnisses aufzunehmen.

Bevorzugt ist die Bildaufnahmeeinrichtung daher geeignet und bestimmt, ein Bild des Behältnisses auch während dessen Bewegung aufzunehmen.

Bei einer bevorzugten Ausführungsform weist die Transporteinrichtung ein Transportband auf, auf dem die Behältnisse stehend gefördert werden. Es wäre jedoch auch denkbar, dass die Transporteinrichtung ein oder zwei Seitenführungsbänder aufweist, zwischen denen Behältnisse gefördert werden können.

Bei einer weiteren vorteilhaften Ausführungsform weist die Transporteinrichtung einen motorischen und insbesondere einen elektromotorischen Antrieb auf. Vorteilhaft weist die Transporteinrichtung auch eine Steuerungseinrichtung zur Steuerung der Transporteinrichtung und insbesondere zur Steuerung der Antriebseinrichtung des Transportbands auf. Vorteilhaft weist die Antriebseinrichtung einen Schrittmotor auf bzw. einen Motor, dessen Drehstellung erfasst werden kann. Vorteilhaft weist die Transporteinrichtung eine Erfassungseinrichtung auf, welche wenigstens eine Position eines Bestandteils der Transporteinrichtung, etwa eine Position eines Transportbandes, erfassen kann.

Bei einer weiteren vorteilhaften Ausführungsform berücksichtigt die Auslöseeinrichtung auch eine Transportgeschwindigkeit und/oder eine Position der Behältnisse auf dem Transportband.

Bei einer weiteren vorteilhaften Ausführungsform ist die Bildaufnahmeeinrichtung zwischen wenigstens zwei Bildaufnahmemodi schaltbar, wobei in einem ersten Bildaufnahmemodus das Inspektionsbild aufnehmbar ist und in einem zweiten Bildaufnahmemodus das Auslösebild. Wie oben erwähnt, unterscheiden sich bevorzugt diese Auslösemodi in wenigstens einer Eigenschaft wie beispielsweise einer Bildauflösung oder dergleichen.

Bei einer weiteren vorteilhaften Ausführungsform weist die Vorrichtung eine weitere Erfassungseinrichtung auf, welche dazu geeignet und bestimmt ist, eine Position des Behältnisses entlang des Transportpfads zu erfassen. Vorteilhaft ist diese weitere Erfassungseinrichtung in der Bewegungseinrichtung der Behältnisse stromaufwärts der Bildaufnahmeeinrichtung angeordnet. Diese weitere Erfassungseinrichtung kann dabei insbesondere dazu dienen, um eine geometrische Position der Behältnisse zumindest grob bereits vorzubestimmen, bevor diese die Bildaufnahmeeinrichtung bzw. den Aufnahmebereich der Bildaufnahmeeinrichtung erreichen. Bevorzugt dient jedoch diese weitere Erfassungseinrichtung nicht dazu, um die Inspektionsbildaufnahme unmittelbar auszulösen.

Besonders bevorzugt weist diese Erfassungseinrichtung wenigstens einen Erfassungssensor wie z. B. eine Lichtschranke auf.

Bei einer weiteren vorteilhaften Ausführungsform weist die Vorrichtung wenigstens eine Beleuchtungseinrichtung auf, welche dazu geeignet und bestimmt ist, die Behältnisse wenigstens während einer Bildaufnahme zu beleuchten. Dabei kann diese Beleuchtungseinrichtung eine Vielzahl von Lichtquellen, beispielsweise eine Vielzahl von LEDs aufweisen. Weiterhin ist es möglich, dass diese Beleuchtungseinrichtung bezüglich des Transportpfades der Behältnisse derart angeordnet ist, dass die Behältnisse durchleuchtet werden bzw. die Behältnisse zwischen der Bildaufnahmeeinrichtung und der Beleuchtungseinrichtung gefördert werden.

Es wäre jedoch auch möglich, dass die Beleuchtungseinrichtung so angeordnet ist, dass die Behältnisse im Auflichtverfahren beleuchtet werden. So könnte die Beleuchtungseinrichtung bezüglich des Transportpfads der Behältnisse auf der gleichen Seite angeordnet sein wie die Bildaufnahmeeinrichtung.

Allgemein ist es möglich, dass die Bildverarbeitungseinrichtung selbst ein (insbesondere hochgenaues) Triggersignal erzeugt und auf diese Weise die im Stand der Technik übliche externe Triggereinheit weggelassen werden kann. Dies kann, wie oben erwähnt, beispielsweise dadurch erfolgen, dass die Bildaufnahmeeinrichtung (bzw. eine Masterkamera in einer synchronen Mehrkameraapplikation) in einem Bildausschnitt, der klein gegenüber der gesamten Chipfläche des Bildsensors ist, mit hoher Frequenz, beispielsweise > 500Hz freilaufend Teilbilder aufnimmt und diese auf die Erfüllung einer Triggerbedingung überprüft.

Ebenso ist es möglich, dass das durch die Bildverarbeitungseinrichtung hochgenau erzeugte Triggersignal an eine oder mehrere stromabwärts befindliche Bildaufnahmeeinrichtungen zeitlich und/oder örtlich verzögert übergeben werden. Damit entfällt vorteilhafterweise die beim Mastersystem eventuell notwendige Trigger- Zusatzbeleuchtung.

Bevorzugt kann durch die Auswahl einer horizontalen und vertikalen Position des Bildausschnitts auf der Sensorfläche die Triggerung auch einfach (beispielsweise auch unter Verwendung eines Computerprogramms) an verschiedene zu triggernde Objekte angepasst werden.

Bevorzugt ist der Bildabschnitt höchstens halb so groß wie die gesamte Chipfläche des Bildsensors, bevorzugt beträgt er höchstens 25% dieser Chipfläche, bevorzugt höchstens 10% dieser Chipfläche.

Dieses Auslesen und Auswerten der Triggerbedingung kann hardwaregestützt in der Kamera selbst oder aber in einem dafür ausgelegten Bildauswertesystem erfolgen. In diesem Fall ist eine Auswertung in einem Bereich einiger µs möglich und damit schneller und in einem höheren Grad an zeitlichem Determinismus, verglichen mit einer externen Triggerlösung.

Bevorzugt wird, sobald die Triggerbedingung erfüllt ist, die Bildaufnahme der Kamera ausgelöst, was jedoch bevorzugt auch mittels eines bestimmten zeitlichen Offsets erfolgen kann.

Wenn der Bildaufnahmeeinrichtung eine oder mehrere Slavekameras und/oder Beleuchtungen im Blitzbetrieb zugeordnet sind, kann dieses Triggersignal auch über eine entsprechend schnelle Schnittstelle an diese Einheiten weitergegeben werden, da die Bildaufnahmeeinrichtungen und Blitzbeleuchtungen praktisch zeitgleich, also typischerweise mit einem maximalen Versatz im einstelligen µs-Bereich getriggert werden sollten.

Generell kann ein Abfall oder Anstieg der mittleren Helligkeit in einem Triggerbildausschnitt über oder unter einem definierten absoluten Schwellwert oder um mehr als eine definierte Sprunghöhe erfolgen oder vorhanden sein.

Ein Abfall oder Anstieg eines Kontrastes der Bildhelligkeiten der einzelnen Pixel in einem Bildausschnitt kann ebenfalls verwendet werden, beispielsweise um damit auf eine Hell-Dunkel-Kante zu triggern. Dabei kann beispielsweise selektiv auf eine horizontale Kante, wie zum Beispiel ein Etikettenrand oder eine vertikale Kante, wie zum Beispiel bei einer liegenden Flasche getriggert werden.

Daneben kann auch wie oben erwähnt ein Abfall oder Anstieg der Varianz und/oder der Ortsfrequenz der Bildhelligkeiten verwendet werden, beispielsweise um damit auf einen 1D- oder 2D-Code zu triggern, der üblicherweise sehr hohe und örtlich schnell wechselnde Kontraste aufweist.

Daneben kann im Rahmen der Bedingungen auch ein bestimmtes Muster mittels eines einfachen Mustervergleichs erkannt werden.

Daneben kann auch eine bestimmte Farbe bzw. Farbe in einem Farbteilraum erkannt werden.

Diese Vorgehensweisen sind nicht auf einen Bildausschnitt begrenzt, es könnten auch mehrere Ausschnitte bzw. mehrere solche Vorgehensweisen ausgewertet und die einzelnen Ergebnisse verknüpft, insbesondere logisch verknüpft werden, um so die Triggerbedingungen zu erzeugen. Dies könnte vorteilhaft bei einer Sortierung beispielsweise von Behältern unterschiedlicher Formate sein, welche die Bildverarbeitungseinheit gemischt durchlaufen.

Um einerseits die freilaufende Bildaufnahme im Bildausschnitt mit einer hohen Frequenz zu einer Triggerung zu ermöglichen und um andererseits auch eine getriggerte Aufnahme eines Gesamtbilds zu ermöglichen, ist es wie oben erwähnt möglich, sowohl eine Triggerbeleuchtung als auch eine Hauptbeleuchtung vorzusehen.

So kann beispielsweise eine Beleuchtung im Dauerlicht oder geschalteten Dauerlicht vorgesehen sein, welches bei einlaufenden Behältern aktiv ist.

Diese Beleuchtung dient bevorzugt sowohl als Triggerbeleuchtung als auch als Hauptbeleuchtung.

Daneben könnte eine blitzbare Beleuchtung vorgesehen sein, beispielsweise eine Durchlichtflächenbeleuchtung, die einen definierten Bereich auf diese Beleuchtung oder auch die gesamte Leuchtfläche permanent als Triggerbeleuchtung leuchten lassen. Dieses Dauerlicht kann dabei mit deutlich verringerter Helligkeit leuchten, insbesondere wenn dies für die Triggerung ausreichend ist.

Zusätzlich zu einer blitzbaren Hauptbeleuchtung kann auch eine Triggerbeleuchtung in einem Dauerlicht installiert werden, was sich insbesondere bei Machine-Vision-Systemen im Auflicht anbietet. Dabei ist es möglich, dass sich das Triggerlicht und das Vision-Licht bereits in der Beleuchtungsart unterscheiden, beispielsweise in einem Fall Auflicht und im anderen Fall Durchlicht verwendet werden. Auch können sich diese Lichtquellen in unterschiedlichen Wellenlängen, Farben oder dergleichen unterscheiden.

Durch die erfindungsgemäße Vorgehensweise werden wesentlich flexiblere Triggerbedingungen gegenüber einer externen Triggerlösung, die beispielsweise auf Lichtschranken basiert, erreicht. Lichtschranken können üblicherweise nur auf Kontrastwechsel reagieren. Daneben wird ein geringerer Aufwand für Mechanik, Drehgeber, Triggersensorik, Verkabelung und Justage und damit eine Kosteneinsparung ermöglicht. Auch kann auf eine einfache Weise eine genauere und schnellere Triggerung ermöglicht werden.

Daneben ist auch keine mechanische Verstellung der Triggereinheit oder von Mehrfachsensoren bei einem Formatwechsel erforderlich.

Durch die Auswahl eines Triggerbildausschnitts in Transportrichtung des Behältnisses kann einfach die Position des Objekts im Kamerabild variiert werden. Weiterhin wird eine erhöhte Betriebssicherheit erreicht und damit auch eine Erhöhung der Anlageneffizienz, da sich zum Beispiel ein Ausfall der Triggersensoren, eine ungenügende Wartung der Sensoren oder des Trackingsystems nicht mehr auf die Anlagenverfügbarkeit auswirken.

Daneben kann auch ein Triggersignal, welches aus einem erfindungsgemäßen Machine-Vision-System stammt, beispielsweise mittels Trackingsystem und Weginkrementen verzögert und einem stromabwärts gelegenen Inspektionssystem zur Verfügung gestellt werden.

Bei einer weiteren vorteilhaften Ausführungsform weist die Vorrichtung eine Ausschleuseinrichtung auf, welche dazu geeignet und bestimmt ist, bestimmte Behältnisse aus einem Transportpfad bzw. Produktpfad auszuschleusen.

Weitere Vorteile und Ausführungsformen ergeben sich aus den beigefügten Figuren.

Darin zeigen:
- Fig. 1: Eine schematische Darstellung einer erfindungsgemäßen Vorrichtung;
- Fig. 2: Eine Darstellung eines Ablaufs eines erfindungsgemäßen Verfahrens;
- Fig. 3: Eine Darstellung zur Erläuterung der Bildaufnahme;
- Fig. 4: Eine Darstellung zum Ablauf des erfindungsgemäßen Verfahrens.

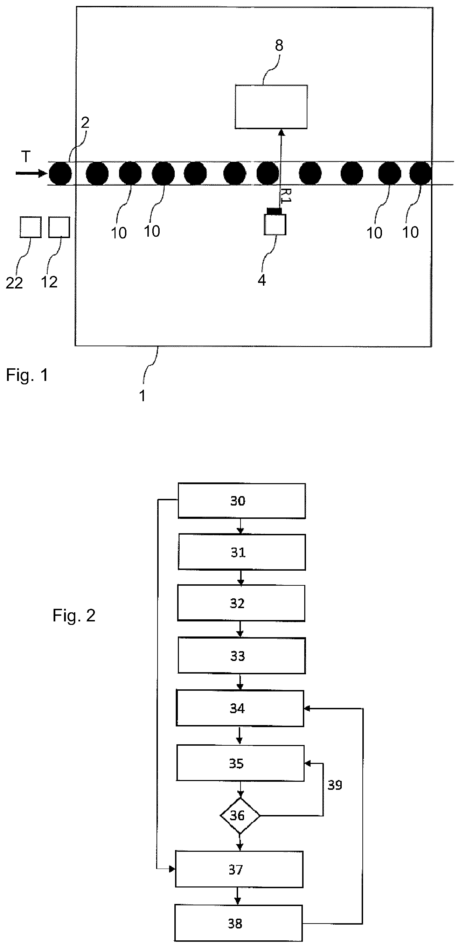

Figur 1 zeigt eine schematische Darstellung einer erfindungsgemäßen Vorrichtung 1 zum Inspizieren von Behältnissen. Dabei werden Behältnisse 10 mittels einer Transporteinrichtung 2 entlang eines vorgegebenen Transportpfads T transportiert. Hier weist die Transporteinrichtung 2 ein Transportband auf, auf dem die Behältnisse gefördert werden.

Das Bezugszeichen 4 kennzeichnet eine Bildaufnahmeeinrichtung, welche die in der Transportrichtung T transportierten Behältnisse beobachtet. Diese Bildaufnahmeeinrichtung 4 nimmt dabei ein ortsaufgelöstes Bild der einzelnen Behältnisse auf.

Das Bezugszeichen 8 kennzeichnet eine Beleuchtungseinrichtung, welche hier bezüglich der einzelnen Behältnisse 10 auf der gegenüberliegenden Seite wie die Bildaufnahmeeinrichtung 4 angeordnet ist.

Das Bezugszeichen R1 kennzeichnet grob schematisch die Triggerbedingung. Falls diese eintritt, wird die Bildaufnahme durch die Bildaufnahmeeinrichtung 4 ausgelöst.

Das Bezugszeichen 12 kennzeichnet eine weitere Lichtschranke, welche den Eintritt von Behältnissen 10 in die erfindungsgemäße Vorrichtung 1 erfasst. Das Bezugszeichen 22 kennzeichnet eine Steuerungseinrichtung und insbesondere einen Drehgeber, mittels dessen eine Position der Transporteinrichtung bzw. auch eine Drehstellung des Antriebs von Umlenkrollen der Transporteinrichtung erfasst werden kann. Diese Daten werden ebenfalls berücksichtigt, um eine Bildaufnahme durch die Bildaufnahmeeinrichtung 4 auszulösen.

Figur 2 zeigt einen schematischen Ablauf eines erfindungsgemäßen Verfahrens. Zunächst wird in einem Schritt 30 eine Livebildkamera gestartet. In einem Verfahrensschritt 31 wird das Behältnis in eine Bildmitte verbracht. Weiterhin werden in einem Schritt 32 ein Trigger und optional auch ein Aufnahmebildausschnitt definiert. Allerdings kann auch für die eigentliche Aufnahme das komplette Bild ausgewertet werden. In einem Schritt 33 wird eine Triggerbedingung definiert bzw. eingelernt. In einem Schritt 34 kann eine Triggerbedingung aktiviert werden. In einem Schritt 35 wird geprüft, etwa anhand einer Highspeedaufnahme in einem kleinen Triggerausschnitt, ob die Triggerbedingung erfüllt ist. Falls die Triggerbedingung erfüllt ist (Schritt 36), wird eine Bildaufnahme eines Gesamtbilds oder eines Bildausschnitts ausgelöst. Falls die Triggerbedingung 36 nicht erfüllt ist, wird nochmals auf Schritt 35 eine Bildaufnahme ausgelöst. Das heißt, diese Schleife wird durchlaufen bis die Triggerbedingung erfüllt ist.

Nach der Bildaufnahme in Schritt 37 wird (Schritt 38) das Bild (z. B. zu einer Aussortiereinheit) übermittelt.

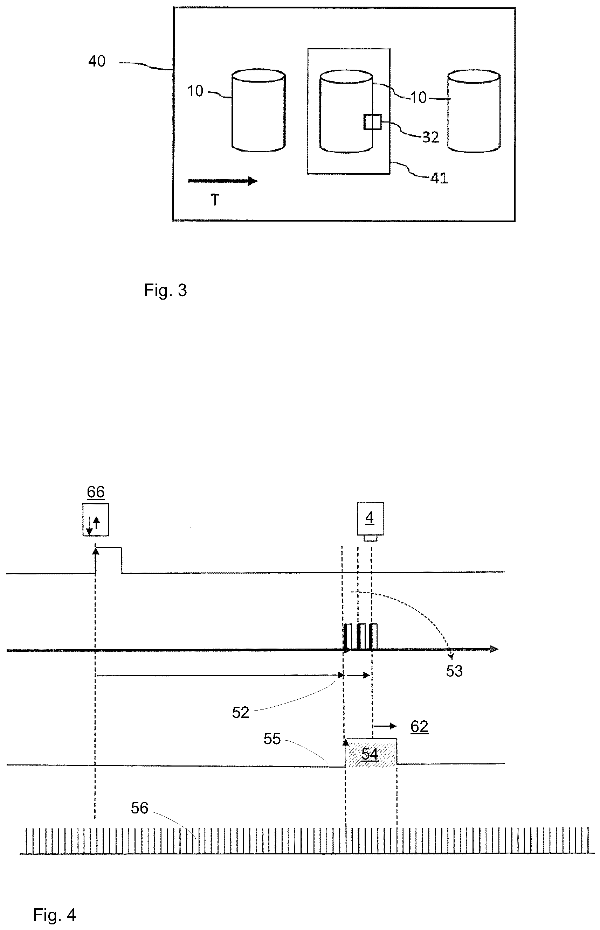

Figur 3 zeigt eine Darstellung zur Erstellung einer Bildaufnahme. Dabei bezieht sich das Bezugszeichen 40 auf ein möglicherweise aufzunehmendes Gesamtbild. Das Bezugszeichen 41 bezieht sich auf die Aufnahme eines Bildausschnitts, insbesondere eines Bildausschnitts, der ein bestimmtes Bild enthält. Innerhalb und/oder außerhalb dieses Bildes kann die Triggerbedingung definiert werden, etwa ein Bereich des Bildes, der sich für eine Triggerauswertung besonders eignet.

Auf diese Weise ist das Auslösebild wesentlich kleiner als das später aufzunehmende Bild, wodurch insbesondere auch eine hohe Bildwiederholrate ermöglicht wird. Dabei ist es denkbar, dass die Bildaufnahmeeinrichtung Bilder bzw. Auslösebilder mit einer Wiederholrate von bis zu mehreren kHz aufnimmt. Die Bildaufnahmeeinrichtung kann die Auslöseaufnahmen so lange wiederholen, bis das Objekt "gefangen" ist bzw. an einer zutreffenden Position lokalisiert ist.

Ist die Triggerbedingung erfüllt, erfolgt die Inspektionsbildaufnahme. Dabei ist die Inspektionsbildaufnahme nicht auf ein Bild limitiert, sondern kann ebenfalls eine Mehrbildaufnahme umfassen besonders bevorzugt mit Umschaltung der Beleuchtungsrichtung bzw. Beleuchtungsart.

Figur 4 zeigt eine weitere Ausgestaltung eines erfindungsgemäßen Verfahrens. Hier wird mittels einer Triggerlichtschranke 66 zunächst grob erfasst, ob ein Behältnis an einem bestimmten Bereich, der vor der eigentlichen Bildaufnahmeeinrichtung 4 liegt, vorhanden ist. Dabei kann eine Behältnisfrequenz, beispielsweise bei 72.000 Behältern pro Stunde liegen, das heißt eine Wiederholfrequenz von einem Behältnis zum nächsten kann bei 20 Hz liegen.

Damit liegt zwischen zwei Behältnissen ein zeitlicher Abstand von ca. 50 ms. Sobald die Position eines bestimmten Behältnisses erfasst wurde, kann der Weg bis zur ungefähren Position 52 der Bildaufnahmeeinrichtung mittels Hochtaktpulsen 56 bestimmt werden. Die Hochtaktpulse werden durch den am Transportband angeschlossenen Drehgeber ermittelt. Der Weg von Triggerlichtschranke 66 bis zur ungefähren Bildaufnahmeeinrichtung 4 wird in Fig. 4 beispielhaft mit 39 Hochtaktpulsen dargestellt.

Ab dem Punkt 52 wird wie in Figur 3 beschrieben verfahren, d.h. mittels (hochfrequenter 53) Auslösebildaufnahmen die exakte Position des Behälters vor der Bildaufnahmeeinrichtung 62 bestimmt, um bei Erreichen dieser eine oder mehrere Inspektionsbildaufnahmen durchzuführen.

Das Bezugszeichen 54 kennzeichnet den Bereich, in dem eine Beleuchtungseinrichtung und/oder die Bildaufnahmeeinrichtung aktiviert ist, beispielsweise um die Beleuchtungseinrichtung im nicht benötigten Zeitraum, also vor und nach 54 zu deaktivieren und somit die Leistungsaufnahme bzw. Wärmeentwicklung der Lichtquelle(n) zu reduzieren

Die Bildaufnahmeeinrichtung weist eine Belichtungszeit auf, die bevorzugt größer als 1 µs, bevorzugt größer als 3 µs, bevorzugt größer als 5 µs und besonders bevorzugt größer als 10 µs ist. Besonders bevorzugt wird eine Belichtungszeit gewählt, die kleiner ist als 1 s, bevorzugt kleiner als 800 µs, bevorzugt kleiner als 500 µs, bevorzugt kleiner als 300 µs, bevorzugt kleiner als 200 µs und besonders bevorzugt kleiner als 100 µs.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Transporteinrichtung
- 4: Bildaufnahmeeinrichtung
- 8: Beleuchtungseinrichtung
- 10: Behältnisse
- 12: Lichtschranke
- 22: Steuerungseinrichtung
- 30-35: Verfahrensschritte
- 37-39: Verfahrensschritte
- 36: Triggerbedingung
- 40: Gesamtbild
- 41: Aufnahme des Bildausschnitts
- 52: ungefähre Position
- 53: hochfrequente Auslösebildaufnahmen
- 54: Bereich, in dem Beleuchtungseinrichtung aktiviert ist
- 55: Bereich
- 56: Hochtaktpulse
- 62: Bildaufnahmeeinrichtung
- 64: Ende des Erwartungsbereichs
- 66: Groberfassung Behältnis; Triggerlichtschranke
- R1: Triggerbedingung
- T: Transportpfad

## Patentansprüche

1. Verfahren zum Inspizieren von Behältnissen (10), wobei die Behältnisse (10) mittels einer Transporteinrichtung (2) entlang eines vorgegebenen Transportpfads transportiert werden und wobei eine Bildaufnahmeeinrichtung (4) während des Transports der Behältnisse wenigstens ein ortsaufgelöstes Inspektions-Bild wenigstens eines Bereichs der Behältnisse (10) aufnimmt
**dadurch gekennzeichnet, dass**
eine Auslösung der Inspektions-Bildaufnahme dieses ortsaufgelösten Bildes gesteuert wird, wobei diese Steuerung unter Berücksichtigung einer Auslöse-Bildaufnahme eines Bildes des Behältnisses erfolgt, wobei die Auslöse-Bildaufnahme durch die Bildaufnahmeeinrichtung erfolgt, und weiter wobei die Auslöse-Bildaufnahme und die Inspektions-Bildaufnahme sich in wenigstens einem für die Bildaufnahme charakteristischen Parameter unterscheiden.

2. Verfahren nach dem vorangegangenen Anspruch,
**dadurch gekennzeichnet, dass**
der Parameter aus einer Gruppe von Parametern ausgewählt ist, welche eine Auflösung des aufgenommenen Bildes, eine Größe des aufgenommenen Bereichs des Behältnisses, eine Farbtiefe des aufgenommenen Bildes, eine Bildwiederholrate, einen Beleuchtungsparameter wie Beleuchtungsstärke, -farbe oder -richtung und dergleichen enthält.

3. Verfahren nach wenigstens einem der vorangegangenen Ansprüche,
**dadurch gekennzeichnet, dass**
die Inspektions-Bildaufnahme unter Berücksichtigung einer Transportgeschwindigkeit und/oder eines Wegs der Behältnisse gesteuert wird.

4. Verfahren nach wenigstens einem der vorangegangenen Ansprüche,
**dadurch gekennzeichnet, dass**
das Behältnis wenigstens zeitweise während der Aufnahme des Inspektions-Bildes und/oder während der Auslöse-Bildaufnahme beleuchtet wird.

5. Verfahren nach dem vorangegangenen Anspruch,
**dadurch gekennzeichnet, dass**
das Behältnis während der Aufnahme des Inspektionsbilds gepulst beleuchtet wird.

6. Verfahren nach wenigstens einem der vorangegangenen Ansprüche,
**dadurch gekennzeichnet, dass**
eine Position des Behältnisses zeitlich und/oder örtlich für der Durchführung der Auslöseaufnahme erfasst wird.

7. Verfahren nach wenigstens einem der vorangegangenen Ansprüche,
**dadurch gekennzeichnet, dass**
die Auslösung des Aufnahme des Inspektionsbildes unter Berücksichtigung einer Auslösebedingung erfolgt, wobei bevorzugt diese Auslösebedingung aus einer Gruppe von Auslösebedingungen ausgewählt ist, welche eine Änderung der mittleren Helligkeit in einem Trigger-Bildausschnitt, eine Änderung eines Kontrastes der einzelnen Pixel in einem Bildausschnitt, eine Änderung der Varianz und/oder Ortsfrequenz der Bildhelligkeiten einzelner Pixel, das Erfassen eines bestimmten Musters und/oder das Erfassen einer bestimmten Farbe enthält.

8. Verfahren nach wenigstens einem der vorangegangenen Ansprüche,
**dadurch gekennzeichnet, dass**
eine Vielzahl von Auslöse-Bildaufnahmen durchgeführt wird und insbesondere eine Vielzahl von Auslöse-Bildaufnahmen insbesondere zyklisch wiederholt wird.

9. Vorrichtung (1) zum Inspizieren von Behältnissen (10), mit einer Transporteinrichtung, welche die Behältnisse (10) entlang eines vorgegebenen Transportpfads transportiert, mit einer ersten Bildaufnahmeeinrichtung (4), welche dazu geeignet und bestimmt ist während des Transports der Behältnisse (10) wenigstens ein ortsaufgelöstes Inspektions-Bild wenigstens eines Bereichs eines Behältnisse (10) aufzunehmen, wobei die Vorrichtung (1) eine Auslöseeinrichtung (4) aufweist, welche dazu geeignet und bestimmt ist, die Auslösung der Inspektions-Bildaufnahme des ortsaufgelösten Bildes zu steuern
**dadurch gekennzeichnet, dass**
die Auslöseinrichtung wenigstens eine Bildaufnahmeeinrichtung (4) und insbesondere die erste Bildaufnahmeeinrichtung aufweist, welche dazu geeignet und bestimmt ist, während des Transports des Behältnisses ein Auslösebild des Behältnisses (10) aufzunehmen, wobei die Auslöse-Bildaufnahme durch die Bildaufnahmeeinrichtung erfolgt, und weiter wobei die Auslöse-Bildaufnahme und die Inspektions-Bildaufnahme sich in wenigstens einem für die Bildaufnahme charakteristischen Parameter unterscheiden.

10. Vorrichtung (1) nach Anspruch 9,
**dadurch gekennzeichnet, dass**
die Bildaufnahmeeinrichtung zwischen wenigstens zwei Bildaufnahmemodi schaltbar ist, wobei in einem ersten Bildaufnahmemodus das Inspektionsbild aufnehmbar ist und in einem zweiten Bildaufnahmemodus das Auslöse-Bild.

11. Vorrichtung (1) nach wenigstens einem der vorangegangenen Ansprüche,
**dadurch gekennzeichnet, dass**
die Vorrichtung (1) eine weitere Erfassungseinrichtung (12) aufweist, welche dazu geeignet und bestimmt ist, eine Position des Behältnisses (10) entlang des Transportpfads zu erfassen.

12. Vorrichtung (1) nach wenigstens einem der vorangegangenen Ansprüche,
**dadurch gekennzeichnet, dass**
die Vorrichtung (1) wenigstens eine Beleuchtungseinrichtung (8) aufweist, welche dazu geeignet und bestimmt ist die Behältnisse wenigstens während einer Bildaufnahme zu beleuchten.

## Claims

1. Method for inspecting containers (10), wherein the containers (10) are conveyed along a predetermined transport path by a transport device (2) and wherein an image recording device (4) records at least one spatially resolved inspection image of at least one area of the containers during the transport of the containers (10),
**characterized in that**
a triggering of the inspection image recording of this spatially resolved image is controlled, wherein this controlling takes place in consideration of a triggering image recording of an image of the container, wherein the triggering image recording is carried out by the image recording device, and further wherein the triggering image recording and the inspection image recording differ in at least one parameter characteristic for the image recording.

2. Method according to the preceding claim,
**characterized in that**
the parameter is selected from a group of parameters containing a resolution of the recorded image, a size of the recorded area of the container, a color depth of the recorded image, a refresh rate, an illumination parameter such as intensity of illumination, illumination color or direction of illumination and the like.

3. Method according to at least one of the preceding claims, **characterized in that**
the inspection image recording is controlled in consideration of a transport speed and/or a path of the containers.

4. Method according to at least one of the preceding claims, **characterized in that**
the container is illuminated at least at times during the recording of the inspection image and/or during the triggering image recording.

5. Method according to the preceding claim,
**characterized in that**
the container is illuminated in a pulsed manner during the recording of the inspection image.

6. Method according to at least one of the preceding claims, **characterized in that**
a position of the container is detected at a time and/or at a location prior to the performance of the triggering recording.

7. Method according to at least one of the preceding claims, **characterized in that**
the triggering of the inspection image recording takes place in consideration of a triggering condition, wherein preferably this triggering condition is selected from a group of triggering conditions which contains a change of the average brightness in a trigger image section, a change of a contrast of individual pixels in an image section, a change in the variance and/or spatial frequency of the image brightnesses of individual pixels, the detection of a specific pattern and/or the detection of a specific color.

8. Method according to at least one of the preceding claims, **characterized in that**
a plurality of triggering image recordings is performed and in particular a plurality of triggering image recordings is repeated in particular cyclically.

9. Apparatus (1) for inspection of containers (10), having a transport device which transports the containers (10) along a predefined transport path, having a first image recording device (4) which is suitable and intended to record at least one spatially resolved inspection image of at least one area of the container (10) during the transport of the containers (10), wherein the apparatus (1) comprises a triggering device (4) which is suitable and intended to control the triggering of the inspection image recording of the spatially resolved image,
**characterized in that**
the triggering device has at least one image recording device (4) and in particular the first image recording device which is suitable and intended to record a triggering image of the container (10) during the transport of the container (10), wherein the triggering image recording is carried out by the image recording device, and further wherein the triggering image recording and the inspection image recording differ in at least one parameter characteristic for the image recording.

10. Apparatus (1) according to claim 9,
**characterized in that**
the image recording device is switchable between at least two image recording modes, wherein in a first image recording mode the inspection image is able to be recorded and in a second image recording mode the triggering image is able to be recorded.

11. Apparatus (1) according to at least one of the preceding claims, **characterized in that**
the apparatus (1) has a further detection device (12) which is suitable and intended to detect a position of the container (10) along the transport path.

12. Apparatus (1) according to at least one of the preceding claims, **characterized in that**
the apparatus (1) has at least one illumination device (8) which is suitable and intended to illuminate the containers at least during an image recording.

## Revendications

1. Procédé d'inspection de récipients (10), dans lequel les récipients (10) sont transportés au moyen d'un système de transport (2) le long d'un trajet de transport prédéfini et dans lequel un système d'enregistrement d'images (4) enregistre au moins une image d'inspection à résolution spatiale d'au moins une zone des récipients (10) pendant le transport des récipients,
**caractérisé en ce que**
un déclenchement de l'enregistrement d'image d'inspection de ladite image à résolution spatiale est commandé, dans lequel ladite commande est effectuée en tenant compte d'un enregistrement d'image de déclenchement d'une image du récipient, dans lequel l'enregistrement d'images de déclenchement est effectué par le système d'enregistrement d'images, et en par ailleurs dans lequel l'enregistrement d'images de déclenchement et l'enregistrement d'images d'inspection sont différents dans au moins un paramètre caractéristique de l'enregistrement d'images.

2. Procédé selon la revendication précédente,
**caractérisé en ce que**
le paramètre est sélectionné dans un groupe de paramètres qui contient une résolution de l'image enregistrée, une taille de la zone enregistrée du récipient, une profondeur de couleur de l'image enregistrée, une fréquence de rafraîchissement d'image, un paramètre d'éclairage tel que l'intensité, la couleur ou la direction de l'éclairage, et similaires.

3. Procédé selon au moins l'une quelconque des revendications précédentes,
**caractérisé en ce que**
l'enregistrement d'image d'inspection est commandé en tenant compte de la vitesse de transport et/ou d'une trajectoire des récipients.

4. Procédé selon au moins l'une quelconque des revendications précédentes,
**caractérisé en ce que**
le récipient est éclairé au moins temporairement pendant l'enregistrement de l'image d'inspection et/ou pendant l'enregistrement d'image de déclenchement.

5. Procédé selon la revendication précédente,
**caractérisé en ce que**
le récipient est éclairé par impulsions pendant l'enregistrement de l'image d'inspection.

6. Procédé selon au moins l'une quelconque des revendications précédentes,
**caractérisé en ce que**
une position du récipient est détectée temporellement et/ou spatialement pour la mise en œuvre de l'enregistrement de déclenchement.

7. Procédé selon au moins l'une quelconque des revendications précédentes,
**caractérisé en ce que**
le déclenchement de l'enregistrement de l'image d'inspection est effectué en tenant compte d'une condition de déclenchement, dans lequel de manière préférée ladite condition de déclenchement est choisie parmi un groupe de conditions de déclenchement qui contient une modification de la luminosité moyenne dans une partie d'image de déclenchement, une modification d'un contraste des pixels individuels dans une partie d'image, une modification de la variance et/ou de la fréquence spatiale des luminosités d'image de pixels individuels, la détection d'un motif défini et/ou la détection d'une couleur définie.

8. Procédé selon au moins l'une quelconque des revendications précédentes,
**caractérisé en ce que**
une pluralité d'enregistrements d'image de déclenchement est mise en œuvre et une pluralité d'enregistrements d'image de déclenchement est en particulier répétée de manière cyclique.

9. Dispositif (1) d'inspection de récipients (10), avec un système de transport, qui transporte les récipients (10) le long d'un trajet de transport prédéfini, avec un premier système d'enregistrement d'images (4) qui est adapté pour et se destine à enregistrer au moins une image d'inspection à résolution spatiale d'au moins une zone d'un récipient (10) pendant le transport des récipients (10), dans lequel le dispositif (1) présente un système de déclenchement (4) qui est adapté pour et se destine à commander le déclenchement de l'enregistrement d'image d'inspection de l'image à résolution spatiale,
**caractérisé en ce que**
le système de déclenchement présente au moins un système d'enregistrement d'images (4) et en particulier le premier système d'enregistrement d'images, qui est adapté pour et se destine à enregistrer une image de déclenchement du récipient (10) pendant le transport du récipient, dans lequel l'enregistrement d'images de déclenchement est effectué par le système d'enregistrement d'images, et en par ailleurs, dans lequel l'enregistrement d'images de déclenchement et l'enregistrement d'images d'inspection sont différents dans au moins un paramètre caractéristique de l'enregistrement d'images.

10. Dispositif (1) selon la revendication 9,
**caractérisé en ce que**
le système d'enregistrement d'images peut être commuté entre au moins deux modes d'enregistrement d'images, dans lequel l'image d'inspection peut être enregistrée dans un premier mode d'enregistrement d'images et l'image de déclenchement dans un deuxième mode d'enregistrement d'images.

11. Dispositif (1) selon au moins l'une quelconque des revendications précédentes,
**caractérisé en ce que**
le dispositif (1) présente un autre système de détection (12) qui est adapté pour et se destine à détecter une position du récipient (10) le long du trajet de transport.

12. Dispositif (1) selon au moins l'une quelconque des revendications précédentes,
**caractérisé en ce que**
le dispositif (1) présente au moins un système d'éclairage (8), qui est adapté pour et se destine à éclairer les récipients au moins pendant un enregistrement d'images.
